# EUROPEAN PATENT SPECIFICATION

(11) **EP 4 369 940 B1**
(45) Date of publication and mention of the grant of the patent: **21.01.2026**
(21) Application number: 22747032.5
(22) Date of filing: 15.07.2022
(51) Int. Cl.: A23G 1/44, A23G 1/48

(54) **CHOCOLATE FREE FROM DAIRY COMPONENTS**
MILCHPRODUKTFREIE SCHOKOLADE
CHOCOLAT EXEMPT DE COMPOSANTS LAITIERS

(30) Priority: 16.07.2021 BE 202105555
(43) Date of publication of application: 22.05.2024
(73) Proprietor: Puratos NV, 1702 Groot-Bijgaarden (BE)
(72) Inventor: OYMAN PERKOZ, Sena, 1950 Kraainem (BE); DEBERTRAND, Agathe, 1030 Schaerbeek (BE); PAREYT, Bram, 9770 Kruisem (BE)
(74) Representative: De Clercq & Partners
(86) International application number: PCT/EP2022/069832
(87) International publication number: WO 2023/285643

(56) References cited:
- WO-A1-2018/167788
- WO-A1-2020/065207
- WO-A1-2020/116565
- WO-A1-2020/127358
- WO-A1-2021/259812
- WO-A1-2022/006194
- CN-A- 105 594 947
- CN-A- 112 056 443
- JP-A- 2019 165 737
- KR-A- 20170 074 783
- US-A1- 2018 295 849
- US-A1- 2021 051 975
- ZAPATKA B.: "Vegan Chocolate Mousse (with Aquafaba) - Bianca Zapatka | Recipes", 17 February 2019 (2019-02-17), pages 1 - 53, XP055837364, Retrieved from the Internet <URL:https://biancazapatka.com/en/vegan-chocolate-mousse/> [retrieved on 20210902]
- ANON.: "Whole grains and legumes, ideal components for application in chocolate", FOOD MARKETING & TECHNOLOGY, vol. 28, no. 2, 1 April 2014 (2014-04-01), pages 10 - 11, XP009533265, ISSN: 0932-2744

## Description

### FIELD OF THE INVENTION

The present invention relates to the field of chocolate. More specifically, the present invention relates to alternatives to milk chocolate or white chocolate that are poor in or free from dairy, such as real chocolate or compound chocolate / compound coating, wherein one or more dairy ingredients have been partially or fully substituted by plant-based ingredient(s).

### BACKGROUND

The global chocolate market represented 44.35 billion USD in 2019 and is expected to grow up to 61.34 billion in 2027. It is consumed at many different moments, by consumers looking for comfort and indulgence.

However, some consumers are no longer satisfied by the promise of a tasty product. They want healthy, environmentally friendly, cruelty free *(i.e.* linked to animal welfare) products. It is in this context that the plant-based diet grew in recent years. This diet focuses on eating primarily fruits, vegetables, legumes, beans, nuts and seeds. It would be simplistic to reduce it to only the vegan diet as it also comprises all people that want to reduce their animal-based products consumption such as vegetarian, pescatarian and flexitarian. In 2020, one in five has reduced or cut out animal-based products from their diet. Recent crisis further increased people awareness on health, security and sustainability in food.

In this context the chocolate market is no exception. Indeed, milk and white (real) chocolates as well as compound chocolates contain milk components, such as milk powder or whey powder. Accordingly, there is a growing trend of launches of new plant-based chocolates.

Some plant-based chocolates use milk alternatives with a pronounced taste such as almond, oat, coconut or hazelnut powder. They are not mimicking milk taste but bring new and alternative flavours. These flavours are quite strong in many cases and may hide or modify the original chocolate taste, rendering these chocolates unsuitable for a wide range of applications. Also is the texture of the product impacted as milk ingredients play other roles than bringing flavour. Furthermore, one important issue with the abovementioned plant-based alternatives is the presence of allergens such as gluten, coconut or nuts.

Allergen-free plant-based chocolates are usually made with a base of rice powder or rice flour. The main issues with these chocolates are the taste and texture. Their taste can be described as sweet however without any special character or pleasant notes. Their texture is (often) lacking (sufficient) creaminess that consumers appreciate in milk or white chocolates but do not find back in those chocolate alternatives.

US10,555,543 B2 discloses the use of pea protein to substitute milk proteins in, *i.a.* milk chocolate. However, as its formulation requires the presence of anhydrous milk fat to keep the chocolate taste and texture, this chocolate is not vegan.

WO2018/167788 describes non-dairy and/or vegan confectionery products, especially chocolate based products and methods of their preparation.

WO2020/065207 describes chocolate products having an increased protein content without a sandy, pasty sensation when tasted, and also describes methods for manufacturing such types of chocolate products.

JP2019/165737 describes food products containing highly conjugated heterocyclic rings complexed to an iron ion and one or more flavor precursors, and using such food products to modulate the flavor and/or aroma profile of other foods. The food products described herein can be prepared in various ways and can be formulated to be free of animal products.

US2018/295849 describes plant-based milk alternative compositions useful in various food and beverage products that approximates the nutritional and functional properties of dairy milk but does not contain dairy or lactose.

As discussed above, the prior art does not provide satisfactory solutions for a vegan chocolate that combines a great taste, a pleasant texture and the absence of allergens. Therefore, there is still a need for new chocolate-type products.

### SUMMARY OF THE INVENTION

Present inventors surprisingly found that use of a protein-rich (*i.e*. protein content of at least 40.0% (w/w DM), preferably of at least 60.0% (w/w DM)) fraction derived from chickpea seeds allows to obtain dairy-free chocolates or chocolates poor in dairy that have a great taste, a pleasant texture and do not comprise allergens. For example, present inventors found that the use of a protein-rich fraction derived from chickpea seeds in a chocolate recipe results in nutty and creamy notes that are well appreciated as chocolate alternatives. These characteristics (nutty and creamy) are making the sensory perception of the chocolate alternative close to milk chocolate (milk chocolate associations) distinct from the perceptions given by dark chocolate (more dominant in cacao, bitter or acid notes). The protein-rich fraction derived from chickpea seeds used by present inventors does not hide or modify the original chocolate taste. Moreover, it allows to obtain a milk-alike vegan chocolate with all the attributes of a dairy-based milk chocolate. Further, it renders the chocolate of present invention suitable for a wide range of applications. Moreover, present inventors demonstrated that when a protein-rich fraction derived from chickpea seeds is used having a fat content of at least 8.0% (w/w DM), preferably at least 10.0% (w/w DM), an even more tasty dairy-free chocolate or chocolate poor in dairy can be obtained than when using a protein-rich fraction derived from chickpea seeds having a fat content of less than 8.0% (w/w DM).

On the other hand, the use of pea protein, lentil protein, rice protein or oat protein, as a substitute for one or more dairy ingredients in a chocolate recipe did not result in an allergen-free, vegan chocolate with a great taste and a pleasant texture, even though some of these proteins had a protein content of at least 40.0% (w/w DM) and/or a fat content of at least 8.0% (w/w DM).

In addition, when one or more dairy ingredients of the chocolate were replaced by only a bulking agent as defined herein (in the absence of a protein-rich fraction derived from chickpea seeds), the resulting chocolate had a sweet and flat taste and had no milk-chocolate associations.

Accordingly, a first aspect provides a milk-type or white-type chocolate comprising a protein-rich fraction derived from chickpea seeds, characterized in that the chocolate is vegan and wherein the chocolate comprises between 2.0 and 20.0% (w/w) of chickpea seed protein originating from the protein-rich fraction derived from chickpea seeds and wherein the protein content of the protein-rich fraction of chickpea seeds is at least 40.0 %(w/w DM).

A further aspect provides a milk-type or white-type chocolate comprising a protein-rich fraction derived from chickpea seeds, the protein content of the protein-rich fraction of chickpea seeds is at least 60.0 %(w/w DM).

In particular embodiments, the fat content of the protein-rich fraction derived from chickpea seeds is at least 8.0% (w/w DM), preferably at least 10.0% (w/w DM).

In particular embodiments, the ratio between the fat content of the protein-rich fraction derived from chickpea seeds and the protein content of the protein-rich fraction derived from chickpea seeds is at least 0.10, preferably at least 0.15.

In particular embodiments, the chocolate further comprises one or more bulking agent(s).

In particular embodiments, the chocolate comprises between 3.0 and 10.0% (w/w) of chickpea seed protein originating from the protein-rich fraction derived from chickpea seeds.

In particular embodiments, the chocolate comprises between 5.0 and 25.0 % (w/w), preferably between 10.0 and 20.0% (w/w) of a combination of a protein-rich fraction derived from chickpea seeds and one or more bulking agent(s).

A further aspect provides a bakery or confectionery product comprising the chocolate as taught herein.

A further aspect provides a method for preparing a milk-type or white-type vegan chocolate comprising
(i) mixing a protein-rich fraction derived from chickpea seeds having a protein content of at least 40.0% (w/w DM)), molten chocolate ingredients comprising cocoa mass and cocoa butter, and optionally one or more bulking agents; or
(ii) mixing a protein-rich fraction derived from chickpea seeds having a protein content of at least 40.0% (w/w DM)), chocolate ingredients comprising cocoa mass and cocoa butter, and optionally one or more bulking agents, while simultaneously melting the chocolate ingredients;
thereby obtaining a milk-type or white-type chocolate, wherein the chocolate comprises between 2.0 and 20.0% (w/w) of chickpea seed protein originating from the protein-rich fraction derived from chickpea seeds.

In particular embodiments, the method further comprises refining, conching and/or tempering the milk-type or white-type chocolate.

A further aspect provides a method for preparing a bakery or confectionery product as taught herein, wherein the chocolate as taught herein is applied as a coating and/or filling to a bakery or confectionery product.

A further aspect provides the use of a protein-rich fraction derived from chickpea seeds having a protein content of at least 40.0% (w/w DM) and optionally one or more bulking agents as a complete or partial replacer for one or more dairy components in a vegan chocolate recipe, wherein the chocolate comprises between 2.0 and 20.0% (w/w) of chickpea seed protein originating from the protein-rich fraction derived from chickpea seeds.

In particular embodiments, the protein content of the protein-rich fraction of chickpea seeds is at least 60.0 %(w/w DM) and/or the fat content of the protein-rich fraction derived from chickpea seeds is at least 8.0% (w/w DM).

### DETAILED DESCRIPTION

Before the present method and devices used in the invention are described, it is to be understood that this invention is not limited to particular methods, components, or devices described as such methods, components, and devices may, of course, vary. It is also to be understood that the terminology used herein is not intended to be limiting, since the scope of the present invention will be limited only by the appended claims.

Unless defined otherwise, all technical and scientific terms used herein have the same meaning as commonly understood by one of ordinary skill in the art to which this invention belongs. Although any method and material similar or equivalent to those described herein may be used in practice or testing of the present invention, the preferred methods and materials are now described.

In this specification and the appended claims, the singular forms "a", "an", "the" include both the singular and the plural, unless the context clearly indicates otherwise.

The terms "comprising", "comprises" and "comprised of" as used herein are synonymous with "including", "includes" or "containing", "contains", and are inclusive or open-ended and do not exclude additional, non-recited members, elements or method steps. Where this description refers to a product or process which "comprises" specific features, parts or steps, this refers to the possibility that other features, parts or steps may also be present, but may also refer to embodiments which only contain the listed features, parts or steps. The terms "comprising", "comprises" and "comprised of" also include the term "consisting of".

The enumeration of numeric values by means of ranges of figures comprises all values and fractions in these ranges, as well as the cited end points.

The terms "about" and "approximately" as used when referring to a measurable value, such as a parameter, an amount, a time period, and the like, is intended to include variations of +/-10% or less, preferably +/-5% or less, more preferably +/-1% or less, and still more preferably +/-0.1% or less, of and from the specified value, in so far as the variations apply to the invention disclosed herein. It should be understood that the value to which the term "about" or "approximately" refers per se has also been disclosed.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

The inventors surprisingly found that the use of a particular type of protein source in the formulation of a chocolate, preferably a milk-type or white-type chocolate, allows to obtain chocolates which are poor in or free from dairy, preferably free from dairy, with an excellent taste and texture and possibly allergen-free. More particularly, present inventors demonstrated that the use of a protein-rich (i.e. protein content of at least 40.0% (w/w DM), preferably of at least 60.0% (w/w DM)) fraction derived from chickpea seeds allows to obtain dairy-free chocolates (or chocolates low in dairy) that have nutty and creamy notes that are well appreciated as chocolate alternatives. On the other hand, the use of other types of protein sources, such as chickpea flour (e.g. regular chickpea flour not having a protein content of at least 40.0% (w/w DM)), pea protein, lentil protein, rice protein or oat protein as a substitute for one or more dairy ingredients in a chocolate recipe did not result in an allergen-free, vegan chocolate with a great taste and a pleasant texture.

Moreover, present inventors demonstrated that when a protein-rich (*i.e*. protein content of at least 40.0% (w/w DM), preferably of at least 60.0% (w/w DM)) fraction derived from chickpea seeds having a fat content of at least 8.0% (w/w DM), preferably at least 10.0% (w/w DM), is used, a tastier dairy-free chocolate can be obtained than when using a protein-rich fraction derived from chickpea seeds having a fat content of less than 8.0% (w/w DM) (or less than 10.0% (w/w DM), respectively). More particularly, the inventors found that the resulting chocolate-type product was slightly less bitter than the chocolate-type product comprising the protein-rich fraction derived from chickpea seeds with a fat content of less than 8.0% (w/w DM) (or less than 10.0% (w/w DM), respectively), while still presenting a creamy sensation in the mouth and having a nutty taste and/or flavour, with milk chocolate associations.

Accordingly, a first aspect provides milk-type or white-type chocolate comprising a protein-rich fraction derived from chickpea seeds, characterized in that the chocolate is vegan and wherein the chocolate comprises between 2.0 and 20.0% (w/w) of chickpea seed protein originating from the protein-rich fraction derived from chickpea seeds and wherein the protein content of the protein-rich fraction of chickpea seeds is at least 40.0 % (w/w DM).

In the context of the present invention the terms "milk-type chocolate" and "white-type chocolate" refer to chocolate that have the same compositions as milk chocolate and white chocolate, respectively, as defined in the present specification, but wherein the amount of dairy products has been reduced or wherein there is no dairy product, therefore not being milk or white chocolate *sensus stricto,* but e.g. a chocolate alternative. In the present invention, the reduced amount of dairy products or absence of dairy products is compensated for by the presence of a protein-rich fraction derived from chickpea seeds, wherein the protein content of the protein-rich fraction of chickpea seeds is at least 40.0% (w/w dry matter (DM)), and optionally one or more bulking agent(s).

In the context of the present invention the term "chocolate" refers to both "real chocolates" and "chocolate analogues" (also referred as compound chocolates). The term "real chocolate" as used herein has its general meaning known in the art and corresponds to the definitions given to dark, milk or white chocolates as in EC directive 2000/36/EC of the European Parliament and the Council, which relates to cocoa and chocolate products intended for human consumption (directive of 23 June 2000), in the FDA Code of Federal Regulations Title 21 Part 163 Cacao products or in other local legislations worldwide that were set for defining chocolate. As used in the present specification, chocolate is defined as a product obtained from cocoa products and sugars (or sugar replacers such as polyols, fibers, rare sugars, etc.) which comprises not less than 35.0% (w/w) of total dry cocoa solids, 18.0% (w/w) cocoa butter and 14.0% (w/w) dry non-fat cocoa solids. In the present specification, the term real chocolate also includes "couverture chocolate", that comprises not less than 35.0 % (w/w) total dry cocoa solids, including not less than 31.0 % (w/w) cocoa butter and not less than 2.50 % (w/w) of dry non-fat cocoa solids. The term "milk chocolate" as used herein has its general meaning known in the art and is preferably defined as a product obtained from cocoa products, sugars (or sugar replacers as above) and milk or milk products, comprising not less than 25.0% (w/w) total dry cocoa solids, 2.50% (w/w) dry non-fat cocoa solids, 12.0% (w/w) dry milk solids, 3.39% (w/w) milk fat and 25.0% (w/w) total fat.

The term "white chocolate" as used herein has its general meaning known in the art and is preferably defined as a product obtained from cocoa butter, milk or milk products and sugars (or sugar replacers as above) which comprises not less than 20.0% (w/w) cocoa butter and 14.0% (w/w) dry milk solids of which not less than 3.50% (w/w) is milk fat.

In particular embodiments, the chocolate comprises less than 5.0% (w/w), less than 4.0% (w/w), less than 3.0% (w/w), less than 2.0% (w/w), less than 1.0% (w/w), less than 0.5% (w/w), or less than 0.1% (w/w) of water.

In addition, optional ingredients may be added to these chocolates such as emulsifiers and flavor components (for example vanilla).

Chocolate analogues are dark, milk or white chocolate products that can be hard, soft or liquid. They comprise a fat phase composed of vegetable fats (typically between 28.0 and 50.0% (w/w)) and a dry phase comprising sugar and/or sugar substitutes (typically between 30.0and 50.0% (w/w)). They may comprise milk powders or milk powders replacers, cocoa powders or cocoa powder replacers (typically between 5.0 and 25.0% (w/w) depending on chocolate analogue type, milk or dark, typically between 5.0 and 15.0% (w/w) for a milk chocolate analogue), emulsifiers, and/or various flavours. They may also contain sugar substitutes as a partial or whole replacement for sugar. These chocolate analogues are typically processed using ballmill refiners, but other refining processes such as 3-rolls/5-rolls or refiner conches are also possible. These chocolate analogues can be used in a wide variety of applications, ranging from moulded products to fillings for patisserie products, from inclusions for bakery to flavouring of doughs. Non-limiting examples of chocolate analogues are: dark, milk and white hard compound chocolates, dark, milk and white soft compound chocolates and dark, milk and white cocoa-based fat fillings.

**In** particular embodiments, the chocolate is dairy-free. **In** particular embodiments, the chocolate is vegan. **In** the context of the present invention the term "vegan chocolate" refers to a chocolate that does not comprise any ingredient from animal origin, more particularly no dairy product/ingredient. The term "vegan" includes other wording such as but not limited to "dairy-free", "animal-free" or "plant-based".

In the context of the present invention the term "protein-rich fraction derived from chickpea seeds" refers to an isolated and/or concentrated protein-rich product obtained from the seeds of chickpea or chick pea, also known as gram, Bengal gram, garbanzo, garbanzo bean or Egyptian pea. **In** particular embodiments, the protein content of the protein-rich fraction derived from chickpea seeds is at least 100%, at least 150%, at least 200%, at least 250%, at least 300, at least 350%, or at least 400% higher than the protein content of the chickpea seeds from which the protein-rich fraction is derived. Methods to obtain a protein-rich fraction derived from chickpea seeds are well known in the art and include for example processing steps like seeds dehulling, mechanical disruption of the seeds (wet or dry milling, grinding, ...), air classification, electroseparation, starch extraction, fiber extraction, protein solubilization through alkaline and/or acid treatments, protein solubilization through fermentation, enzymatic treatment, pH neutralisation, protein iso-electric point flocculation, heat treatment, concentration (filtration, centrifugation, ...) and drying (freeze-drying, fluid-bed drying, ...).

In particular embodiments, the protein-rich fraction derived from chickpea seeds is derived from the entire chickpea seed (i.e. comprising at least the seed coat and the cotyledon) or dehulled chickpea seeds (i.e. not comprising the seed coat).

In particular embodiments, the chickpea seeds are of the species *Cicer arietinum.*

The chickpea seed may be of any chickpea seed variety known in the art, such as Desi, Kabuli, Amethyst, Flipper, Kyabra, Jimbour, Moti, PBA HatTRick, or Yorker.

In particular embodiments, the chickpea seeds are not sprouted or germinated chickpea seeds.

In particular embodiments, the protein-rich (*i.e*. protein content of at least 40.0% (w/w DM), preferably of at least 60.0% (w/w DM)) fraction derived from chickpea seeds is completely derived from chickpea seeds. In particular embodiments, the protein-rich fraction derived from chickpea seeds is substantially free from or comprises less than 0.10% (w/w), preferably less than 0.010%, more preferably 0.0%, of any added components (e.g. components which were not originally present within the chickpea seeds and/or are externally added), such as processing aids, added protein, added vitamins, added sugars etc.

The protein-rich fraction derived from chickpea seeds comprises at least 40.0 %(w/w dry matter (DM)), at least 45.0 % (w/w DM), at least 50.0% (w/w DM), at least 55.0% (w/w DM), preferably at least 60.0 %(w/w DM), more preferably at least 65.0% (w/w DM), such as at least 66.0 %(w/w DM), at least 67.0 %(w/w DM), at least 68.0 %(w/w DM) or at least 69.0 %(w/w DM), even more preferably at least 70.0 % (w/w DM) protein(s), such as at least 71.0% (w/w DM) of protein(s). In other words, the protein-rich fraction derived from chickpea seeds has a protein content of at least 40.0 %(w/w DM), at least 45.0 % (w/w DM), at least 50.0% (w/w DM), at least 55.0% (w/w DM) , preferably at least 60.0 %(w/w DM), more preferably at least 65.0% (w/w DM), such as at least 66.0 %(w/w DM), at least 67.0 %(w/w DM), at least 68.0 %(w/w DM) or at least 69.0 % (w/w DM), even more preferably at least 70.0 % (w/w DM), such as at least 71.0% (w/w DM). In particular embodiments, the protein content of the protein-rich fraction derived from chickpea seeds is between 40.0% (w/w DM) and 99.0% (w/w DM), between 40.0% (w/w DM) and 95.0% (w/w DM), between 60.0% (w/w DM) and 99.0% (w/w DM), between 70.0% (w/w DM) and 99.0% (w/w DM), between 60.0% (w/w DM) and 95.0% (w/w DM), between 70.0% (w/w DM) and 95.0% (w/w DM), between 60.0% (w/w DM) and 90.0% (w/w DM), between 60.0% (w/w DM) and 80.0% (w/w DM) or between 65.0% (w/w DM) and 80.0% (w/w DM).

The protein content is indicated as the % by weight of total dry matter (DM) of the protein-rich fraction derived from chickpea seeds (which may be referred to in the present specification as "% w/w DM").

The protein content of the protein-rich fraction derived from chickpea seeds can be determined by any method known in the art.

Chickpea flour typically has a protein content of about 24.0% (w/w DM). Accordingly, in particular embodiments, the protein-rich (*i.e.* protein content of at least 40.0% (w/w DM), preferably of at least 60.0% (w/w DM)) fraction derived from chickpea seeds is not chickpea flour. The term "chickpea flour" as used herein refers to a powder obtained by grinding whole or dehulled chickpea seeds. The flour includes partly or entirely milled chickpea grains.

In particular embodiments, the protein-rich (*i.e.* protein content of at least 40.0% (w/w DM), preferably of at least 60.0% (w/w DM)) fraction derived from chickpea seeds may originate from or may be derived from chickpea flour.

In particular embodiments, the chocolate does not comprise chickpea flour.

In particular embodiments, the chocolate does not comprise entire (i.e. unfragmented) chickpea seeds or entire (i.e. unfragmented) dehulled chickpea seeds.

In particular embodiments, the chocolate does not comprise any chickpea seed components or fragments other than the protein-rich (*i.e.* protein content of at least 40.0% (w/w DM), preferably of at least 60.0% (w/w DM)) fraction derived from chickpea seeds.

In particular embodiments, the protein-rich *(i.e.* protein content of at least 40.0% (w/w DM), preferably of at least 60.0% (w/w DM)) fraction derived from chickpea seeds is not obtained by a method encompassing a debittering step. For example, in particular embodiments, chemical components having a bitter taste, such as saponins or other antinutrients, such as hydrophobic peptides, are not deliberately removed from protein-rich fraction derived from chickpea seeds.

In some embodiments, the protein-rich (*i.e.* protein content of at least 40.0% (w/w DM), preferably of at least 60.0% (w/w DM)) fraction derived from chickpea seeds is included in the chocolate recipe as a powder, preferably dry powder. In particular embodiments, the moisture content of the protein-rich *(i.e.* protein content of at least 40.0% (w/w DM), preferably of at least 60.0% (w/w DM)) fraction derived from chickpea seeds is at most 12.0% (w/w), at most 10.0% (w/w), at most 8.0% (w/w), at most 6.0% (w/w), at most 5.0% (w/w), at most 4.0% (w/w), at most 3.0% (w/w), at most 2.0%(w/w), at most 1.0% (w/w) or at most 0.50% (w/w).

Accordingly, in particular embodiments, the protein-rich (*i.e.* protein content of at least 40.0% (w/w DM), preferably of at least 60.0% (w/w DM)) fraction derived from chickpea seeds is homogenously distributed throughout the chocolate.

In some embodiments, the protein-rich (*i.e.* protein content of at least 40.0% (w/w DM), preferably of at least 60.0% (w/w DM)) fraction derived from chickpea seeds comprises at least 8.0 (w/w DM), at least 9.0 % (w/w DM), preferably at least 10.0%(w/w DM), fat(s). In other words, in particular embodiments, the fat content of the protein-rich fraction derived from chickpea seeds is at least 8.0% (w/w DM), at least 9.0 % (w/w DM), preferably at least 10.0%(w/w DM). The fat content is indicated as the % by weight of total dry matter of the protein-rich fraction derived from chickpea seeds (which may be referred to in the present specification as "% w/w DM").

In some preferred embodiments, the ratio between the fat content of the protein-rich *(i.e.* protein content of at least 40.0% (w/w DM), preferably of at least 60.0% (w/w DM)) fraction derived from chickpea seeds and the protein content of the protein-rich fraction derived from chickpea seeds (i.e. fat content: protein content) is at least 0.10, or at least 0.15, preferably between 0.10 and 0.30, more preferably between 0.15 and 0.25. In other words, in some preferred embodiments, in the chocolates as taught herein, the ratio between the chickpea seed fat content and the chickpea seed protein content is at least 0.10 or at least 0.15, preferably between 0.10 and 0.30, more preferably between 0.15 and 0.25. In particular embodiments, (i) the fat content of the protein-rich fraction derived from chickpea seeds is at least 8.0 % (w/w DM), at least 9.0 % (w/w DM), preferably at least 10.0%(w/w DM), and (ii) the protein content of the protein-rich fraction derived from chickpea seeds is at least 40.0 %(w/w DM) , at least 45.0 % (w/w DM), at least 50.0% (w/w DM), at least 55.0% (w/w DM), preferably at least 60.0 %(w/w DM), more preferably at least 65.0% (w/w DM), such as at least 66.0 %(w/w DM), at least 67.0 %(w/w DM), at least 68.0 %(w/w DM) or at least 69.0 %(w/w DM), even more preferably at least 70.0 % (w/w DM). Preferably, the protein-rich fraction derived from chickpea seeds has a fat content of at least 10.0% (w/w DM) and a protein content of at least 60.0% (w/w DM). More preferably, the protein-rich fraction derived from chickpea seeds has a fat content of at least 10.0%(w/w DM) and a protein content of at least 65.0% (w/w DM). Even more preferably, the protein-rich fraction derived from chickpea seeds has a fat content of at least 10.0%(w/w DM) and a protein content of at least 70.0% (w/w DM).

In preferred embodiments the chocolate comprises between 2.0 and 20.0 %(w/w), between 2.0 and 10.0 %(w/w), or between 3.0 and 20.0 %(w/w) chickpea seeds proteins originating from the protein-rich (*i.e.* protein content of at least 40.0% (w/w DM), preferably of at least 60.0% (w/w DM)) fraction derived from chickpea seeds, preferably between 3.0 and 10.0%(w/w) chickpea seeds proteins originating from the protein-rich fraction derived from chickpea seeds. The skilled person knows how to identify (and quantify) chickpea proteins in a composition by using common techniques such as but not limited to Western blotting, ELISA, SDS-PAGE, HPLC or mass spectrometry with or without preliminary protein extraction, digestion (partial, total, enzymatic, ...).

Present inventors surprisingly found that either the protein-rich (*i.e.* protein content of at least 40.0% (w/w DM), preferably of at least 60.0% (w/w DM)) fraction derived from chickpea seeds alone, or the protein-rich fraction derived from chickpea seeds in combination with one or more bulking agents, can be used as a replacer (e.g. on a 1:1 weight basis) for one or more dairy components (i.e. one or more dairy ingredients) in a chocolate recipe. Accordingly, in particular embodiments, the weight percentage of dairy components in a chocolate recipe may be completely replaced by the same weight percentage of a protein-rich fraction derived from chickpea seeds alone, or in combination with one or more bulking agent(s).

Accordingly, in particular embodiment, the chocolate further comprises one or more bulking agent(s).

In the context of the present invention the term "bulking agent" refers to a food ingredient that increases food volume or weight of food while keeping its utility or functionality intact. In particular embodiments, a bulking agent only increases the bulk of food and does not affect its nutritional value. The bulking agent has preferably no or little functionality (e.g. taste, texture, colour) when added to a food product. More particularly in the present invention the bulking agent has no or little effect on the sweetness, the colour, the mouthfeel, the texture, the flavour and/or the taste of the chocolate. Preferably the bulking agent has a neutral taste and/or does not alter/modify the taste of the chocolate. Examples of bulking agent are fractions or derivatives of plants seeds such as, but not limited to, wheat, corn, and/or rice. Examples of such fractions or derivatives of plant seeds are flours, starches, maltodextrins and (glucose) syrups. Other examples of suitable bulking agents include inulins, oligofructoses, fibers, polyols. Preferred bulking agents are flours, starches, maltodextrins, (dried) glucose syrups and mixtures thereof. More preferred bulking agents are (dried) glucose syrups or mixtures of flour, starch and (dried) glucose syrup, preferably from rice. Even more preferred bulking agent is (dried) glucose syrup, preferably (dried) rice (glucose) syrup.

In particular embodiments, the one or more bulking agent(s) are not chickpea flour.

The protein-rich (*i.e.* protein content of at least 40.0% (w/w DM), preferably of at least 60.0% (w/w DM)) fraction derived from chickpea seeds or the combination of a protein-rich fraction derived from chickpea seeds and one or more bulking agent(s) may act as a complete or partial replacer for one or more dairy components (i.e. one or more dairy ingredients), preferably for all dairy components of the chocolate, such as for the milk powder in a chocolate recipe, preferably a milk or white chocolate recipe.

In particular embodiments, the sum of the amount of protein-rich (*i.e*. protein content of at least 40.0% (w/w DM), preferably of at least 60.0% (w/w DM)) fraction derived from chickpea seeds and the amount of bulking agent is equal to the amount of non-vegan (dairy) ingredients used in a non-vegan milk- or white-type chocolate.

Dairy components, such as milk powder, are typically included in milk-type chocolate or white-type chocolate in an amount of between 5.0 and 25.0 % (w/w). Accordingly, in particular embodiments, the chocolate comprises at least 5.0% (w/w), at least 10.0% (w/w), preferably between 5.0 and 25.0 % (w/w), such as between 5.0 and 20.0% (w/w) or between 10.0 and 25.0% (w/w), more preferably between 10.0 and 20.0% (w/w), of a protein-rich fraction derived from chickpea seeds or of a combination of a protein-rich fraction derived from chickpea seeds and one or more bulking agent(s).

In particular embodiments, if the chocolate comprises a combination of a protein-rich (*i.e.* protein content of at least 40.0% (w/w DM), preferably of at least 60.0% (w/w DM)) fraction derived from chickpea seeds and one or more bulking agent(s), the chocolate comprises at least 2.0% (w/w), at least 3.0% (w/w), at least 4.0% (w/w), at least 5.0% (w/w), or at least 6.0% (w/w) of the protein-rich fraction derived from chickpea seeds.

In particular embodiments, the sum of (i) the amount of one or more dairy components (e.g. the amount of milk powder) and (ii) the amount of protein-rich (*i.e.* protein content of at least 40.0% (w/w DM), preferably of at least 60.0% (w/w DM)) fraction derived from chickpea seeds and optionally the one or more bulking agent(s) in the chocolate is at least 5.0% (w/w), at least 10.0% (w/w), preferably between 5.0 and 25.0 % (w/w), such as between 5.0 and 20.0% (w/w) or between 10.0 and 25.0% (w/w), more preferably between 10.0 and 20.0% (w/w).

In particular embodiments, the chocolate does not comprise a coconut component, such as coconut fiber, dried coconut, coconut powder, coconut oil, coconut butter, coconut milk, coconut cream, coconut nectar, coconut shards, and any combinations thereof.

In particular embodiments, the chocolate does not comprise a protein-rich fraction derived from a legume other than chickpea seeds. In particular embodiments, the chocolate does not comprise a non-dairy vegan source dried powder different from a protein-rich fraction derived from chickpea seeds, such as a non-dairy vegan source dried powder selected from tofu/soy powder, dried non-dairy milk powder (e.g. nut based milk, grain based milk, cereal based milk and any combinations), dried protein fraction of legume other than chickpea seeds, dried protein fraction of grain and any combinations thereof. The person skilled in the art will understand that as this embodiments relates to a chocolate, cocoa powder or other cocoa components should not be considered as a non-dairy vegan source dried powder. In particular embodiments, the chocolate does not comprise a protein-rich fraction derived from a legume other than chickpea seeds in addition to cocoa powder.

The chocolate as taught herein can be prepared by any method known in the art.

It is particularly advantageous that the method to obtain the milk-type or white-type chocolate as taught herein does not require adaptations compared to the methods and processes well-known in the art to produce chocolate. Suitable methods and processes to produce chocolate may be found in the book edited by S.T. Beckett "Industrial chocolate manufacture and use"; Blackwell Publishing Ltd., 2009.

A further aspect provides a method for preparing chocolate as taught herein, preferably milk-type or white-type chocolates as taught herein.

Typically, a chocolate is produced by mixing and optionally pre-grinding the ingredients of the chocolate recipe. Next, the mixture is typically refined and optionally subjected to conching and tempering depending if the recipe comprises cocoa butter or other fats. Finally, the products are cooled and optionally moulded.

The mixing may comprise combining the ingredients together by any means in the art to get a homogenous paste, such as a mixer. Suitable mixers include batch mixers, batch vertical mixers, batch horizontal mixers, continuous mixers. The mixing step may also be performed manually. For example, the mixer may be a kitchen robot, a Hobart mixer, or a Stephan mixer. Preferably, the mixer has temperature control.

In particular embodiments, the method for preparing a milk-type or white-type chocolate, such as the chocolate as taught herein, comprises mixing a protein-rich fraction derived from chickpea seeds having a protein content of at least 40.0% (w/w DM), molten chocolate ingredients comprising cocoa mass and cocoa butter, and optionally one or more bulking agent(s); thereby obtaining a chocolate, wherein the chocolate comprises between 2.0 and 20.0% (w/w) of chickpea seed protein originating from the protein-rich fraction derived from chickpea seeds..

In particular embodiments, the method for preparing a milk-type or white-type chocolate, such as the chocolate as taught herein, comprises mixing a protein-rich fraction derived from chickpea seeds having a protein content of at least 40.0% (w/w DM), chocolate ingredients comprising cocoa mass and cocoa butter, and optionally one or more bulking agent(s), while simultaneously melting the chocolate ingredients; thereby obtaining a chocolate, wherein the chocolate comprises between 2.0 and 20.0% (w/w) of chickpea seed protein originating from the protein-rich fraction derived from chickpea seeds..

Melting may be performed at a temperature of between 40.0°C and 50.0°C, such as about 45.0°C.

In particular embodiments, the method for preparing a chocolate preferably a milk-type or white-type chocolate, such as the chocolate as taught herein, comprises mixing:
- between 5.0 and 25.0 % (w/w), such as between 5.0 and 20.0% (w/w) or between 10.0 and 25.0% (w/w), more preferably between 10.0 and 20.0% (w/w), of a protein-rich *(i.e.* protein content of at least 40.0% (w/w DM), preferably of at least 60.0% (w/w DM)) fraction derived from chickpea seeds and optionally one or more bulking agent(s),
- cocoa mass,
- cocoa butter,
- sugar(s) and/or sweetener(s), and
- optionally flavoring component(s) and/or lecithin
while simultaneously melting the chocolate ingredients; thereby obtaining a chocolate.

The sugar may also be pre-refined prior to adding the sugar to the mixture, such as using a sugar mill.

In particular embodiments, the method further comprises refining, conching and/or tempering the chocolate.

The mixing and refining may be performed using several types of equipment. Most popular ones are ball mills, multiple rolls refiners and conche refiners. The choice of one or another tool depends on the desired fineness of the mixture as well as on the desired type of chocolate. Alternative equipment known in the art may also be used. In a preferred embodiment, the ingredients are refined on a multiple rolls refiner such as 3-rolls or 5-rolls. In another embodiment, the ingredient mixture is refined to a fineness of 15 to 30, preferably about 20 µm.

In the method for preparing a chocolate as taught herein, the refined ingredient mixture is optionally conched. Conching, which is a combination of mixing and heating allows to develop the full aromatic potential of chocolate while eventually removing some less appreciated acidic compounds and moisture. The conching parameters depends on the desired type of chocolate and are well known by the skilled person. In some embodiments, the method for preparing a chocolate as taught herein comprises a conching step.

During the tempering step, liquefied mixture is cooled and solidified following a precise temperature curve in order to obtain an optimum crystallization of the fat phase and therefore optimal shine, snap and shelf-life stability of the chocolate. The tempering is particularly required when specific fats, such as cocoa butter, are used. The exact temperature curves depend on the chocolate type and are easily determined by the skilled person.

Optionally, at the end of the process, the chocolate may be moulded to give to the product a specific weight and/or shape.

The chocolate of the present invention may be consumed as such like a regular milk or white chocolate containing dairy ingredients. Other applications of the chocolate as taught herein include its use to coat, enrobe or fill foods products.

Non-limiting example of uses of the chocolate as taught herein are:
- chocolate and confectionery applications including chocolate bars, chocolate barks, chocolate spreads, chocolate drinks, chocolate-coated marshmallows, praline shells and praline fillings;
- fillings, coatings and inclusions for bakery applications such as brioches, buns, panettone, and croissants; and,
- fillings, coatings, inclusions and ganaches for patisserie applications such as cakes, brownies, cookies, cereal bars, and Danish pastries.

Accordingly, a further aspect provides a bakery or confectionery product comprising the chocolate as taught herein.

The bakery or confectionery product may be any bakery or confectionery product known in the art, such as chocolate bars, chocolate barks, chocolate spreads, pralines, fillings for bakery or patisserie applications, coatings for bakery or patisserie applications, ganaches for bakery or patisserie applications, or inclusions for bakery or patisserie applications.

As described elsewhere in the present specification, present inventors found that the use of a protein-rich fraction derived from chickpea seeds in a chocolate recipe results in nutty and creamy notes that are well appreciated as chocolate alternatives. These characteristics (nutty and creamy) are making the sensory perception of the chocolate alternative close to milk chocolate (milk chocolate associations) distinct from the perceptions given by dark chocolate (more dominant in cacao, bitter or acid notes). Accordingly, in particular embodiments, the animal fraction, such as the milk fraction, of chocolate, is replaced by the protein-rich (*i.e.* protein content of at least 40.0% (w/w DM), preferably of at least 60.0% (w/w DM)) chickpea seeds fraction and optionally one or more bulking agent(s).

As described but not claimed, the animal/milk fraction of the chocolate is replaced one to one by a protein-rich (*i.e.* protein content of at least 40.0% (w/w DM), preferably of at least 60.0% (w/w DM)) chickpea seeds fraction and optionally one or more bulking agent(s).

A further aspect provides a method for preparing a bakery or confectionery product, such as the bakery or confectionery product as taught herein, wherein the chocolate as taught herein is applied as a coating and/or filling to a bakery or confectionery product.

A further aspect provides the use of a protein-rich fraction derived from chickpea seeds having a protein content of at least 40.0% (w/w DM) and optionally one or more bulking agent(s) as a complete or partial, preferably complete, replacer for one or more dairy components (i.e. one or more dairy ingredients) in a chocolate recipe, preferably a milk-chocolate or white chocolate recipe, wherein the chocolate comprises between 2.0 and 20.0% (w/w) of chickpea seed protein originating from the protein-rich fraction derived from chickpea seeds. As described but not claimed, the protein-rich fraction derived from chickpea seeds has a protein content of at least 40.0% (w/w DM) and optionally one or more bulking agent(s), replacing at least 10.0% (w/w), at least 20.0% (w/w), at least 30.0% (w/w), at least 40.0% (w/w), at least 50.0% (w/w), at least 60.0% (w/w), at least 70.0% (w/w); at least 80.0% (w/w), at least 90.0% (w/w), such as at least 95.0% (w/w), at least 96.0% (w/w), at least 97.0% (w/w), at least 98.0% (w/w) or at least 99.0% (w/w), preferably 100.0% (w/w) of the one or more dairy components in a chocolate recipe, preferably a milk-chocolate or white chocolate recipe.

The protein content and fat content of the protein-rich fraction derived from chickpea seeds may be as described elsewhere in the present specification for the chocolate as taught herein. In particular embodiments, the protein content of the protein-rich fraction of chickpea seeds is at least 60.0 %(w/w DM) and/or the fat content of the protein-rich fraction derived from chickpea seeds is at least 8.0% (w/w DM)

The person skilled in the art will understand that the particular embodiments of the methods as taught herein are also applicable to the products and uses as taught herein and *vice versa.*

The above aspects and embodiments are further supported by the following non-limiting examples.

### EXAMPLES

### EXAMPLE 1: properties of protein-rich fractions derived from seeds

Table 1 lists the properties of the protein sources used to prepare chocolate compositions in Examples 2-4.

**Table 1**

| Name | Origin | %protein (w/w) | %fat (w/w) |
|---|---|---|---|
| Chickpea protein 1 | Chickpea | 69.1 | 10 |
| Chickpea protein 2 | Chickpea | 90 | 0.8 |
| Yellow pea protein | Yellow pea | 80 | 10-12 |
| Pea protein 1 | pea | 80 | nd |
| Pea protein 2 | pea | 51 | 4.3 |
| Pea protein 3 | pea | 51 | 3.1 |
| Lentil protein | lentil | 51 | 3.1 |
| Rice protein 1 | rice | nd | nd |
| Rice protein 2 | rice | 75 | 8 |
| Oat protein | oat | 60 | nd |
| Chickpea flour | chickpea | 20 | 5.6 |

| | | | |
|---|---|---|---|
| nd: not determined | | | |

The chickpea protein 1 and 2 are dry powders and have a moisture content of 3 and 5% respectively, meaning that the protein content of chickpea protein 1 and 2 is about 71.23 % (w/w DM) and 94.74 % (w/w DM), respectively, and the fat content of chickpea protein 1 and 2 is about 10.31 % (w/w DM) and 0.87 % (w/w DM), respectively, when being expressed as the % by weight of the total dry matter of the chickpea protein.

### EXAMPLE 2: vegan milk-type chocolates obtained with the ball mill process

Chocolates were made using the compositions of Table 2.

**Table 2: chocolate compositions**

| % (w/w)* | ref | 2A | 2B | 2C | 2D | 2E | 2F | 2G | 2H | 2I | 2J | 2K | 2L | 2M |
|---|---|---|---|---|---|---|---|---|---|---|---|---|---|---|
| Sugar | 43.08 - 43.47 | | | | | | | | | | | | | |
| Pre-conched cocoa mass | 11.19 | | | | | | | | | | | | | |
| Cocoa butter | 32 | | | | | | | | | | | | | |
| Milk powder | 13.03 | - | - | - | - | - | - | - | - | - | - | - | - | - |
| bulking agent** | - | 13.03 | 6.67 | 8.53 | 7.79 | 8.18 | 3.18 | 3.15 | 3.18 | 7.33 | 5.29 | - | - | 11.03 |
| Chickpea protein 1 | - | - | 6.36 | - | - | - | - | - | - | - | - | - | 13.03 | 2.00 |
| Chickpea protein 2 | - | - | - | 4.5 | - | - | - | - | - | - | - | - | - | - |
| Yellow pea protein | - | - | - | - | 5.24 | - | - | - | - | - | - | - | - | - |
| Pea protein 1 | - | - | - | - | - | 4.85 | - | - | - | - | - | - | - | - |
| Pea protein 2 | - | - | - | - | - | - | 9.85 | - | - | - | - | - | - | - |
| Pea protein 3 | - | - | - | - | - | - | - | 9.88 | - | - | - | - | - | - |
| Lentil protein 3 | - | - | - | - | - | - | - | - | 9.85 | - | - | - | - | - |
| Rice protein 2 | - | - | - | - | - | - | - | - | - | 5.7 | - | - | - | - |
| Oat protein | - | - | - | - | - | - | - | - | - | - | 7.74 | - | - | - |
| Chickpea flour | - | - | - | - | - | - | - | - | - | - | - | 13.03 | - | - |
| Lecithin | 0.30 - 0.60 | | | | | | | | | | | | | |
| Natural vanilla | 0.01 - 0.1 | | | | | | | | | | | | | |
| Total | 100.00 | 100.00 | 100.00 | 100.00 | 100.00 | 100.00 | 100.00 | 100.00 | 100.00 | 100.00 | 100.00 | 100.00 | 100.00 | 100.00 |

| | | | | | | | | | | | | | | |
|---|---|---|---|---|---|---|---|---|---|---|---|---|---|---|
| * amount of lecithin and natural vanilla is identical in all compositions ** dry product containing rice flour, rice starch and rice syrup | | | | | | | | | | | | | | |

### Ball mill process

The ingredients of the chocolate compositions were mixed at 40°C for 10 min in a Hobart kneader and poured in a ball mill (Duyvis Wiener W1S). Subsequently, the mixture was refined until the mixture reached a fineness of around 20.0 µm. Chocolates were then hand-tempered on a marble table, and moulded into tablets.

### Evaluation of the chocolate

Chocolates were evaluated by a panel of experts trained to taste and describe chocolate. The following descriptors were evaluated according to the following definitions:
- Caramel: corresponds to the taste and/or flavour of heated/cooked sugar. This can be pure or mixed with milk, condensed milk or cream.
- Cocoa: corresponds to the typical taste and/or flavour of cocoa beans that are well fermented, roasted and free of defects.
- Creamy: corresponds to the sensation of having a cream in the mouth (smooth melting of the product in the mouth).
- Grainy: corresponds to the feeling of having sand particles in the mouth ("sandy") or even bigger particles ("grainy").
- Green: corresponds to the taste and/or flavour of unripe, pea pod, or to a sensation of grassy, leafy, earthy or bitter.
- Milk chocolate associations: corresponds to the sensations perceived when tasting a chocolate made with dairy ingredients.
- Milky: corresponds to the taste and/or flavour of fresh milk, cooked milk, yoghurt, cream, ...
- Nutty: corresponds to the taste and/or flavour of nuts such as peanuts, hazelnuts, almonds and/or walnuts. Includes also the astringent sensation associated with the skins of nuts.
- Pasty: corresponds to the sensation of having a paste in the mouth that does not melt away easily.
- Sweet: corresponds to the sweetness given by sugar, honey and syrup.

### Results

**Table 3: sensory results**

| CHOCOLATE | SENSORY DESCRIPTION |
|---|---|
| reference | typical of milk chocolate |
| 2A | sweet and flat taste; no milk chocolate associations |
| 2B | creamy; nutty; with milk chocolate associations |
| 2C | creamy; nutty; with milk chocolate associations; slightly more bitter than 2B |
| 2D | neutral taste; no milk chocolate associations |
| 2E | green, pulse-like off-taste; unpleasant |
| 2F | very strong green flavour (stronger than E); pulse-like off-taste; unpleasant |
| 2G | green taste (less strong than E); unpleasant |
| 2H | very strong green flavour, pulse-like off-taste; unpleasant |
| 2I | mixed evaluation from green to neutral taste/flavour |
| 2J | neutral taste; no milk chocolate associations |
| 2K | unpleasant green taste; grainy and pasty mouthfeel; unpleasant |
| 2L | creamy; nutty; with milk chocolate associations |
| 2M | sweet; creamy; mildly nutty; with milk chocolate-like associations |

The use of chickpea protein with a protein content of at least 40.0% (w/w DM) allows to obtain chocolates that have nutty and creamy notes that are well appreciated as milk chocolate alternatives. These characteristics (nutty and creamy) are making the sensory perception close to milk chocolate (milk chocolate associations) distinct from the perceptions given by dark chocolate (more dominant in cacao, bitter or acid notes). Furthermore, the use of chickpea protein with a protein content of at least 40.0% (w/w DM), preferably at least 60.0% (w/w DM), and a fat content of at least 8.0% (w/w DM), preferably at least 10% (w/w DM), allows to obtain chocolate that is even more pleasant in taste than a similar chocolate prepared using chickpea protein with a fat content of less than 8.0% (w/w DM).

### EXAMPLE 3: vegan milk-type chocolates obtained with the 3-rolls/conching process

Vegan milk-type chocolates were made using the compositions of Table 4.

**Table 4: chocolates compositions**

| % (w/w)* | Ref | 3A | 3B | 3C.1 | 3C.2 | 3D.1 | 3D.2 | 3E |
|---|---|---|---|---|---|---|---|---|
| Sugar | 34.65 - 36.69 | | | | | | | |
| Cocoa mass | 20 | 20 | 20 | 20 | 20 | 20 | 20 | 17 |
| Cocoa butter | 25 | 28 | 28 | 28 | 28 | 28 | 28 | 22.5 |
| Milk powder | 20 | | | | | | | |
| Bulking agent1 | | 15 | | | | 10 | | 0 |
| Bulking agent2*** | | | | | | | 10 | |
| Oat powder | | | 15 | | | | | |
| Almond powder | | | | 15 | | | | |
| Coconut powder | | | | | 15 | | | |
| Chickpea protein 1 | | 0 | 0 | | | 5 | 5 | 25 |
| Lecithin | 0.1 - 0.6 | | | | | | | |
| Natural vanilla | 0.01 -0.1 | | | | | | | |
| TOTAL* | 100.00 | 100.00 | 100.00 | 100.00 | 100.00 | 100.00 | 100.00 | 100.00 |

| | | | | | | | | |
|---|---|---|---|---|---|---|---|---|
| * amount of lecithin and natural vanilla is identical in all compositions ** dry product containing rice flour, rice starch and rice syrup ***dried rice syrup | | | | | | | | |

### 3-rolls and conche process

Cocoa mass, sugar and milk replacers (e.g. chickpea protein 1 optionally in combination with a bulking agent, bulking agent alone, almond powder alone, or coconut powder alone) were mixed together in a Hobart kneader for 10 min at around 40°C. Part of the cocoa butter was added to reach the proper texture. The mixture was refined with a 3-rolls refiner to a fineness of around 20 µm and then conched in a Elkolino conche for 3 to 6 hours at 50 to 60°C. The chocolate was then liquified with the remaining cocoa butter and lecithin hand-tempered on a marble table and moulded into tablets.

### Evaluation of the chocolates

Sensory evaluation was performed as described in example 2

### Results

**Table 5**

| CHOCOLATE | SENSORY DESCRIPTION |
|---|---|
| reference | Typical of milk chocolate |
| 3A | Sweet and cocoa taste; no milk chocolate associations |
| 3B | Neutral taste, no milk chocolate associations |
| 3C.1 | Dominant almond aromatic notes |
| 3C.2 | Dominant coconut aromatic notes |
| 3D.1 | Creamy; nutty; slightly sweet; with milk chocolate associations |
| 3D.2 | Creamy; nutty; slightly sweet; with milk chocolate associations |
| 3E | Nutty; slightly pasty; with milk chocolate associations |

The use of chickpea protein with a protein content of at least 40.0% (w/w DM) allows to obtain chocolates that have nutty and creamy notes that are well appreciated as milk chocolate alternatives. The chocolates containing chickpea protein with a protein content of at least 40.0% (w/w DM) has clearly tastes attributes associated to milk chocolate and are devoid of dominant "non-milk chocolate" flavours. The dominant aromatic notes present in chocolates 3C are too pronounced for a milk-type chocolate. Furthermore, this may render those chocolates unsuitable for some applications wherein the mentioned dominant aromatic notes could interfere with the desired flavour (e.g. in chocolate bars, chocolate ganaches, ...).

### EXAMPLE 4: vegan milk-type chocolates

Milk-type compound chocolates (chocolate analogues) were made using the compositions of table 6.

**Table 6**

| % (w/w)* | ref | 4A | 4B | 4C |
|---|---|---|---|---|
| Sugar | 49.1 - 49.7 | | | |
| Cocoa powder | 5.8 | 5.8 | 5.8 | 5.8 |
| vegetable fat (palm) | 34.4 | 34.4 | 34.4 | 34.4 |
| Skimmed milk powder | 10 | - | - | - |
| bulking agent ** | - | - | 10 | 5 |
| Chickpea protein 1 | - | - | - | 5 |
| Lecithin | 0.1-0.6 | | | |
| Natural vanilla | <0.1 | | | |
| TOTAL | 100.00 | 100.00 | 100.00 | 100.00 |

| | | | | |
|---|---|---|---|---|
| * amount of lecithin and natural vanilla is identical in all compositions ** dry product containing rice flour, rice starch and rice syrup | | | | |

### Process

chocolates were prepared using the ball mill process as described in example 2.

### Evaluation of the chocolates

Sensory evaluation was performed as described in example 2.

### Results

**Table 7**

| CHOCOLATE | SENSORY DESCRIPTION |
|---|---|
| Ref | typical of milk chocolate |
| 4A | overly sweet; no milk chocolate associations |
| 4B | bland; no milk chocolate associations |
| 4C | close to reference, milk chocolate associations |

### EXAMPLE 5: vegan white-type chocolate

White-type compound chocolates (chocolate analogues) were made using the compositions of table 8

**Table 8**

| % (w/w)* | ref. | A | B |
|---|---|---|---|
| Sugar | 49.9 - 50 | | |
| vegetable fat (palm) | 34.4 | 34.4 | 34.4 |
| Skimmed milk powder | 15.5 | - | - |
| bulking agent** | - | 15.5 | 7.75 |
| Chickpea protein 1 | - | - | 7.75 |
| lecithin | 0.1-0.6 | | |
| Natural vanilla | <0.1 | | |
| **TOTAL** | **100.00** | **100.00** | **100.00** |

| | | | |
|---|---|---|---|
| * amount of lecithin and natural vanilla is identical in all compositions ** contains rice flour, rice starch and rice syrup | | | |

### Process

chocolates were prepared using the ball mill process as described in example 2.

### Evaluation of the chocolates

Sensory evaluation was performed as described in example 2.

### Results

Sample A was described as a sweet compound coating without much taste, its sensory properties being predominantly relying on sweetness. Sample B had more character with pleasant nutty and creamy notes that bring the indulgence of a milk containing white compound chocolate reference.

## Claims

1. A milk-type or white-type chocolate comprising a protein-rich fraction derived from chickpea seeds, **characterized in that** the chocolate is vegan and wherein the chocolate comprises between 2.0 and 20.0% (w/w) of chickpea seed protein originating from the protein-rich fraction derived from chickpea seeds and wherein the protein content of the protein-rich fraction of chickpea seeds is at least 40.0% (w/w dry matter (DM)).

2. The chocolate according to claim 1, wherein the protein content of the protein-rich fraction of chickpea seeds is at least 60.0% (w/w DM).

3. The chocolate according to claim 1 or 2, wherein the fat content of the protein-rich fraction derived from chickpea seeds is at least 8.0% (w/w DM), preferably at least 10.0% (w/w DM).

4. The chocolate according to claim 2 or 3, wherein the ratio between the fat content of the protein-rich fraction derived from chickpea seeds and the protein content of the protein-rich fraction derived from chickpea seeds is at least 0.10, preferably at least 0.15.

5. The chocolate according to any one of claims 1 to 4, further comprising one or more bulking agent(s).

6. The chocolate according to any one of claims 1 to 5, wherein the chocolate comprises between 3.0 and 10.0% (w/w) of chickpea seed protein originating from the protein-rich fraction derived from chickpea seeds.

7. The chocolate according to claim 5 or 6, wherein the chocolate comprises between 5.0 and 25.0 % (w/w), preferably between 10.0 and 20.0% (w/w), of a combination of a protein-rich fraction derived from chickpea seeds and one or more bulking agents.

8. A bakery or confectionery product comprising the chocolate according to any one of claims 1 to 7.

9. A method for preparing a milk-type or white-type vegan chocolate comprising
(i) mixing a protein-rich fraction derived from chickpea seeds having a protein content of at least 40.0% (w/w DM)), molten chocolate ingredients comprising cocoa mass and cocoa butter, and optionally one or more bulking agents; or
(ii) mixing a protein-rich fraction derived from chickpea seeds having a protein content of at least 40.0% (w/w DM)), chocolate ingredients comprising cocoa mass and cocoa butter, and optionally one or more bulking agents, while simultaneously melting the chocolate ingredients;
thereby obtaining a milk-type or white-type chocolate, wherein the chocolate comprises between 2.0 and 20.0% (w/w) of chickpea seed protein originating from the protein-rich fraction derived from chickpea seeds.

10. The method according to claim 9, further comprising refining, conching and/or tempering the milk-type or white-type chocolate.

11. A method for preparing a bakery or confectionery product according to claim 8, wherein the chocolate according to any one of claims 1 to 7 is applied as a coating and/or filling to a bakery or confectionery product.

12. Use of a protein-rich fraction derived from chickpea seeds having a protein content of at least 40.0% (w/w DM) and optionally one or more bulking agents as a complete or partial replacer for one or more dairy components in a vegan chocolate recipe, wherein the chocolate comprises between 2.0 and 20.0% (w/w) of chickpea seed protein originating from the protein-rich fraction derived from chickpea seeds.

13. The method according to claim 9 or 10 or the use according to claim 12, wherein the protein content of the protein-rich fraction of chickpea seeds is at least 60.0 % (w/w DM) and/or the fat content of the protein-rich fraction derived from chickpea seeds is at least 8.0% (w/w DM).

## Patentansprüche

1. Schokolade eines Milchtyps oder weißen Typs, umfassend eine aus Kichererbsensamen gewonnene proteinreiche Fraktion, **dadurch gekennzeichnet, dass** die Schokolade vegan ist, und wobei die Schokolade zwischen 2,0 und 20,0 % (Gew.-%) Kichererbsensamenprotein umfasst, das aus der aus Kichererbsensamen gewonnenen proteinreichen Fraktion stammt, und wobei der Proteingehalt der proteinreichen Fraktion von Kichererbsensamen mindestens 40,0 % (Gew.-% Trockenmasse (TM)) ist.

2. Schokolade nach Anspruch 1, wobei der Proteingehalt der proteinreichen Fraktion von Kichererbsensamen mindestens 60,0 % (Gew.-% TM) ist.

3. Schokolade nach Anspruch 1 oder 2, wobei der Fettgehalt der aus Kichererbsensamen gewonnenen proteinreichen Fraktion mindestens 8,0 % (Gew.-% TM), bevorzugt mindestens 10,0 % (Gew.-% TM), ist.

4. Schokolade nach Anspruch 2 oder 3, wobei das Verhältnis zwischen dem Fettgehalt der aus Kichererbsensamen gewonnenen proteinreichen Fraktion und dem Proteingehalt der aus Kichererbsensamen gewonnenen proteinreichen Fraktion mindestens 0,10, bevorzugt mindestens 0,15, ist.

5. Schokolade nach einem der Ansprüche 1 bis 4, ferner umfassend einen oder mehrere Füllstoff(e).

6. Schokolade nach einem der Ansprüche 1 bis 5, wobei die Schokolade zwischen 3,0 und 10,0 % (Gew.-%) Kichererbsensamenprotein umfasst, das aus der aus Kichererbsensamen gewonnenen proteinreichen Fraktion stammt.

7. Schokolade nach Anspruch 5 oder 6, wobei die Schokolade zwischen 5,0 und 25,0 % (Gew.-%), bevorzugt zwischen 10,0 und 20,0 % (Gew.-%), einer Kombination aus einer aus Kichererbsensamen gewonnenen proteinreichen Fraktion und einem oder mehreren Füllstoffen umfasst.

8. Back- oder Süßwarenerzeugnis, umfassend die Schokolade nach einem der Ansprüche 1 bis 7.

9. Verfahren zum Herstellen einer veganen Schokolade eines Milchtyps oder weißen Typs, umfassend
(i) Mischen von einer aus Kichererbsensamen gewonnenen proteinreichen Fraktion, die einen Proteingehalt von mindestens 40,0 % (Gew.-% TM)) aufweist, geschmolzenen Schokoladenzutaten, umfassend Kakaomasse und Kakaobutter, und optional einem oder mehreren Füllstoffen; oder
(ii) Mischen von einer aus Kichererbsensamen gewonnenen proteinreichen Fraktion, die einen Proteingehalt von mindestens 40,0 % (Gew.-% TM)) aufweist, Schokoladenzutaten, umfassend Kakaomasse und Kakaobutter, und optional einem oder mehreren Füllstoffen, während gleichzeitig die Schokoladenzutaten geschmolzen werden;
wodurch eine Schokolade eines Milchtyps oder weißen Typs erlangt wird, wobei die Schokolade zwischen 2,0 und 20,0 % (Gew.-%) Kichererbsensamenprotein umfasst, das aus der aus Kichererbsensamen gewonnenen proteinreichen Fraktion stammt.

10. Verfahren nach Anspruch 9, ferner umfassend ein Raffinieren, Conchieren und/oder Temperieren der Schokolade eines Milchtyps oder weißen Typs.

11. Verfahren zum Herstellen eines Back- oder Süßwarenerzeugnisses nach Anspruch 8, wobei die Schokolade nach einem der Ansprüche 1 bis 7 als ein Überzug und/oder eine Füllung auf ein Back- oder Süßwarenerzeugnis aufgebracht ist.

12. Verwendung einer aus Kichererbsensamen gewonnenen proteinreichen Fraktion, die einen Proteingehalt von mindestens 40,0 % (Gew.-% TM) aufweist, und optional eines oder mehrerer Füllstoffe als ein vollständiger oder teilweiser Ersatz für ein oder mehrere Milchbestandteile in einem veganen Schokoladenrezept, wobei die Schokolade zwischen 2,0 und 20,0 % (Gew.-%) Kichererbsensamenprotein umfasst, das aus der aus Kichererbsensamen gewonnenen proteinreichen Fraktion stammt.

13. Verfahren nach Anspruch 9 oder 10 oder Verwendung nach Anspruch 12, wobei der Proteingehalt der proteinreichen Fraktion von Kichererbsensamen mindestens 60,0 % (Gew.-% TM) und/oder der Fettgehalt der aus Kichererbsensamen gewonnenen proteinreichen Fraktion mindestens 8,0 % (Gew.-% TM) ist.

## Revendications

1. Chocolat de type lait ou de type blanc comprenant une fraction riche en protéines dérivée de graines de pois chiche, **caractérisé en ce que** le chocolat est végétalien et dans lequel le chocolat comprend entre 2,0 et 20,0 % (p/p) de protéines de graines de pois chiche provenant de la fraction riche en protéines dérivée de graines de pois chiche et dans lequel la teneur en protéines de la fraction riche en protéines de graines de pois chiche est d'au moins 40,0 % (p/p de matière sèche (MS)).

2. Chocolat selon la revendication 1, dans lequel la teneur en protéines de la fraction riche en protéines de graines de pois chiche est d'au moins 60,0 % (p/p MS).

3. Chocolat selon la revendication 1 ou 2, dans lequel la teneur en matières grasses de la fraction riche en protéines dérivée de graines de pois chiche est d'au moins 8,0 % (p/p de matière sèche (MS)), de préférence d'au moins 10,0 % (p/p de matière sèche (MS)).

4. Chocolat selon la revendication 2 ou 3, dans lequel le rapport entre la teneur en matières grasses de la fraction riche en protéines dérivée de graines de pois chiche et la teneur en protéines de la fraction riche en protéines dérivée de graines de pois chiche est d'au moins 0,10, de préférence d'au moins 0,15.

5. Chocolat selon l'une quelconque des revendications 1 à 4, comprenant également un ou plusieurs agents de charge.

6. Chocolat selon l'une quelconque des revendications 1 à 5, dans lequel le chocolat comprend entre 3,0 et 10,0 % (p/p) de protéines de graines de pois chiche provenant de la fraction riche en protéines dérivée de graines de pois chiche.

7. Chocolat selon la revendication 5 ou 6, dans lequel le chocolat comprend entre 5,0 et 25,0 % (p/p), de préférence entre 10,0 et 20,0 % (p/p), d'une combinaison d'une fraction riche en protéines dérivée de graines de pois chiche et d'un ou plusieurs agents de charge.

8. Produit de boulangerie ou de confiserie comprenant le chocolat selon l'une quelconque des revendications 1 à 7.

9. Procédé de préparation d'un chocolat végétalien de type lait ou de type blanc comprenant
(i) le mélange d'une fraction riche en protéines dérivée de graines de pois chiche présentant une teneur en protéines d'au moins 40,0 % (p/p MS), des ingrédients de chocolat fondu comprenant de la pâte de cacao et du beurre de cacao, et éventuellement un ou plusieurs agents de charge ; ou
(ii) le mélange d'une fraction riche en protéines dérivée de graines de pois chiche présentant une teneur en protéines d'au moins 40,0 % (p/p MS), des ingrédients de chocolat comprenant de la pâte de cacao et du beurre de cacao, et éventuellement un ou plusieurs agents de charge, tout en faisant fondre simultanément les ingrédients de chocolat ;
permettant d'obtenir un chocolat de type lait ou de type blanc, dans lequel le chocolat comprend entre 2,0 et 20,0 % (p/p) de protéines de graines de pois chiche provenant de la fraction riche en protéines dérivée de graines de pois chiche.

10. Procédé selon la revendication 9, comprenant également le raffinage, le conchage et/ou le tempérage du chocolat de type lait ou du chocolat de type blanc.

11. Procédé de préparation d'un produit de boulangerie ou de confiserie selon la revendication 8, dans lequel le chocolat selon l'une quelconque des revendications 1 à 7 est appliqué comme enrobage et/ou comme fourrage à un produit de boulangerie ou de confiserie.

12. Utilisation d'une fraction riche en protéines dérivée de graines de pois chiche présentant une teneur en protéines d'au moins 40,0 % (p/p MS) et éventuellement d'un ou plusieurs agents de charge comme substitut total ou partiel d'un ou plusieurs composants laitiers dans une recette de chocolat végétalien, dans laquelle le chocolat comprend entre 2,0 et 20,0 % (p/p) de protéines de graines de pois chiche provenant de la fraction riche en protéines dérivée de graines de pois chiche.

13. Procédé selon la revendication 9 ou 10 ou utilisation selon la revendication 12, dans lequel ou laquelle la teneur en protéines de la fraction riche en protéines de graines de pois chiche est d'au moins 60,0 % (p/p MS) et/ou la teneur en matières grasses de la fraction riche en protéines dérivée de graines de pois chiche est d'au moins 8,0 % (p/p MS).
